# EUROPÄISCHE PATENTANMELDUNG

(11) **EP 1 659 549 A1**
(43) Veröffentlichungstag der Anmeldung: **24.05.2006**
(21) Anmeldenummer: 05024500.0
(22) Anmeldetag: 10.11.2005
(51) Int. Cl.: G07G 1/00, A47F 9/04, G07F 7/02, G01G 19/414

(54) **Verfahren und Anordnung zur Erfassung von Warendaten**

(30) Priorität: 23.11.2004 DE 102004056561
(71) Anmelder: Wincor Nixdorf International GmbH, 33106 Paderborn (DE)
(72) Erfinder: Böddecker, Alexandra, 33142 Büren (DE); Röhl, Klaus-Peter, 33106 Paderborn (DE)

(57) **Zusammenfassung**

Verfahren und Anordnung zur Erfassung und Abrechnung von Warendaten mit einer Warendaten-Erfassungseinheit, wobei die Warendaten in maschinenlesbarer Form insbesondere als Barcode oder als RFID-Chip an den Waren angebracht sind. Vor dem Sammeln der Waren wird der unbeladene Einkaufswagen in einem ersten Bereich gewogen. Nach Abschluss des Sammelns wird der Einkaufswagen in einen zweiten Bereich gebracht wird, in dem eine Wägung des beladenen Einkaufswagens vorgenommen wird. Des weiteren wird die Warendaten-Erfassungseinheit ausgelesen. Die aus den Warendaten ermittelten Gewichte der Waren werden kumuliert und mit dem Gewicht des mit diesen Waren beladenen Einkaufswagens unter Abzug von dessen Leergewicht verglichen, und aus den Preisen der Waren wird eine Schlussrechnung gebildet.

## Beschreibung

Die Erfindung betrifft ein Verfahren und eine Anordnung zur Erfassung und Abrechnung von Warendaten.

Es sind eine Vielzahl von Verfahren und Anordnungen zur Erfassung von Warendaten bekannt. So ist aus der DE 40 39 377 A1 bekannt, in Warenverkaufsgeschäften gekaufte und üblicherweise in einem Warenkorb oder einem Einkaufswagen gesammelte Waren an einem Selbstbedienungs-Warenerfassungsplatz zu erfassen und eine automatische Abrechnung zu erstellen. Der Kunde bringt hierzu die von ihm gesammelten Waren zu einem Warenerfassungsplatz und führt sie durch eine Abtasteinrichtung, mit der an den Waren angebrachte strichcodierte Etiketten abgetastet werden. Danach werden die Waren in eine Ablage gelegt, die auch ein weiterer Einkaufswagen sein kann und die mit einer Waage gekoppelt ist. Beim Identifizieren der Waren durch Abtasten ihrer Etiketten werden der Warenpreis und das Warengewicht ermittelt. Der Warenpreis wird an ein Kassensystem gemeldet und die Gewichtsinformationen einer Vergleichseinrichtung zugeführt. Wenn die Waren dann anschließend gewogen werden, kann ihr Gewicht mit den bei der Identifizierung gewonnenen Gewichtsinformationen verglichen werden. Stimmen die Vergleichsgrößen überein, kann ein Betrugsversuch ausgeschlossen werden.

Es ergibt sich bei dieser Vorgehensweise jedoch das Problem, dass das Warengewicht toleranzbehaftet ist, das heißt, dass es bei dem Vergleich der Gewichtsinformation mit dem durch Wiegen ermittelten Gewicht zu Fehlauswertungen kommen kann. Es ist deshalb bereits vorgeschlagen worden, vor der Abtasteinrichtung eine zweite Waage anzuordnen. Der Kunde muss dann die Waren Stück für Stück aus dem Warenkorb bzw. Einkaufswagen nehmen, auf die zweite Waage legen, durch die Abtasteinrichtung führen und anschließend in die Ablage legen. Diese umständliche Vorgehensweise findet bei Kunden wenig Akzeptanz.

In der US 4 787 467 A ist deshalb vorgeschlagen worden, vor und hinter der Abtasteinrichtung eine Bodenwaage anzuordnen. Mit Hilfe der vor der Abtasteinrichtung befindlichen Waage wird das Gesamtgewicht eines ersten Einkaufswagens mit den gesammelten Waren ermittelt. Die Waren werden diesem Einkaufswagen einzeln entnommen, an der Abtasteinrichtung entlang geführt und in einem zweiten Einkaufswagen abgelegt, der auf der hinter der Abtasteinrichtung angeordneten Waage aufgestellt ist. Das Gesamtgewicht vor der Abtasteinrichtung muss mit dem Gesamtgewicht hinter der Abtasteinrichtung und mit dem aus den Gewichtsinformationen aller Waren kumulierten Gewicht übereinstimmen. Auch hier muss der Kunde die Waren Stück für Stück aus dem Einkaufswagen nehmen, über die Abtasteinrichtung führen und anschließend in die Ablage legen.

In der DE 196 46 153 A1 ist ein Verfahren beschrieben, das dazu dient, mehrere Transponder zu identifizieren, die sich gemeinsam in einem Sendefeld eines Verprobers befinden und unterschiedliche, den jeweiligen Transponder kennzeichnende Nummern haben. Alle Waren müssen dazu mit einem Transponder ausgestattet sein.

Aus der DE 197 08 020 C1 ist eine Warenerfassungs- und Abrechnungseinrichtung mit einer Bereitstellungseinheit bekannt, in der eine Vielzahl von tragbaren Warendaten-Erfassungseinheiten zur Entnahme durch einen Kunden bereitgehalten werden, wobei die Warendaten-Erfassungseinheit einen Leser für Strichcodemarkierungen, einen Speicher für gelesene Strichcodemarkierungen, eine Anzeigeeinrichtung und wenigstens eine Eingabetaste umfasst und die Bereitstellungseinheit eine Datenverarbeitungseinheit, ein Sichtgerät, einen Bondrucker und eine Halteeinrichtung für jede Warendaten-Erfassungseinheit mit einer Datenverbindung enthält, über die in dem Speicher gespeicherte Warendaten aus diesem ausgelesen und der Datenverarbeitungseinheit zugeführt werden können. Ein Kunde erhält beim Betreten eines Warenhauses eine Kundenkarte. Mit dieser meldet er sich über einen Magnetstreifenleser bei der Bereitstellungseinheit an, welche daraufhin einen Strichcodeleser mit Datenspeicher - die Warendaten-Erfassungseinheit - freigibt. Der Kunde liest mit der Warendaten-Erfassungseinheit den Strichcode von jeder zum Kauf ausgewählten Ware, der in einem Speicher gespeichert wird. Sobald der Kunde seinen Einkauf beendet hat, steckt er die Warendaten-Erfassungseinheit in die Bereitstellungseinheit zurück, wo automatisch ein Kassenbon mit den einzeln aufgeführten Waren ausgedruckt wird. Der Kunde kann den Rechnungsbetrag an der Bereitstellungseinheit mit seiner Kreditkarte oder an einer Zahlkasse bar begleichen.

Alle diese beschriebenen Verfahren decken jedoch nur einen Teilaspekt des gesamten Einkaufsprozesses ab. Bisher liegt jedoch ein optimierter Gesamtprozess nicht vor.

Aufgabe der Erfindung ist es daher, ein Verfahren und eine Anordnung zur automatischen Erfassung von Warendaten und deren Abrechnung anzugeben, das eine effizientere Erfassung von Waren ermöglicht und zu einer erhöhten Kundenakzeptanz führt.

Diese Aufgabe wird durch die Merkmale des Anspruchs 1 sowie die Merkmale des Anspruchs 5 gelöst.

Da zunächst das Gewicht eines von einem Benutzer in Benutzung genommenen Einkaufswagens vor Beginn des Beladens mit zu kaufenden Waren ermittelt wird und in der Warendaten-Erfassungseinheit oder in einer Zentraleineit gespeichert wird, ist eine automatische und gewichtskontrollierte Warenerfassung auch möglich, wenn anderweitig erworbene Waren oder ein Einkaufskorb in den Einkaufswagen gelegt werden.

Die Warendaten jeder in den Einkaufswagen gelegten Ware werden von der Warenerfassungseinheit erfasst und dort gespeichert. Nach Abschluss des Sammelns wird der Einkaufswagen in einen zweiten Bereich gebracht, in dem ein drahtloser Zugriff auf die Warendaten-Erfassungseinheit möglich ist und eine Wägung des beladenen Einkaufswagens vorgenommen wird. Die Waren müssen dabei nicht einzeln aus dem Einkaufswagen genommen werden, da ihre Daten bereits während des Sammelns in der Warendaten-Erfassungseinheit erfasst worden sind. Es kann vorteilhafterweise vorgesehen sein, dass in diesem Bereich auch noch ein Lesegerät für Waren mit einem RFID-Chip vorgesehen ist. Diese Waren können dann in diesem Bereich erfasst werden und müssen daher nicht während des Sammelns von der Warenerfassungs-Einheit erfasst werden. Um eine doppelte Erfassung zu vermeiden, enthält daher für diese Variante die mobile Warenerfassungs-einheit nur ein Lesegerät für eine Barcodecodierung.

Mit Hilfe der aus der Warendaten-Erfassungseinheit ausgelesenen Warendaten wird das Gewicht und der Preis der im Einkaufswagen befindlichen Waren beispielsweise aus einem sogenannten Price Look Up-Speicher entnommen. Die mit den Warendaten ermittelten Gewichte der Waren werden kumuliert und mit dem Gesamtgewicht des Einkaufswagens verglichen. Das Nettogewicht der Waren errechnet sich aus dem aktuellen Wägeergebnis abzüglich des bekannten Gewichts des Einkaufswagens. Stimmt das Gewicht nicht innerhalb eines vorgebbaren Toleranzbereichs überein, so ist dies ein Indiz dafür, dass nicht alle gesammelten Waren erfasst worden sind. Unter Steuerung dieser Gewichtsdifferenz kann ein Signal an die Aufsicht des Warenhauses gegeben werden.

Mit den aus den Warendaten ermittelten Preisen der Waren wird eine Schlussrechnung gebildet.

Das erfindungsgemäße Verfahren hat den Vorteil, dass der Kunde die Waren für die Abrechnung nicht aus dem Einkaufswagen nehmen und dann wieder zurücklegen muss und dass trotzdem eine irrtums- und betrugssichere Abrechnung gewährleistet ist. Darüber hinaus ist gegenüber herkömmlichen Verfahren eine wesentlich schnellere Erfassung und Abrechnung der gesammelten Waren möglich.

Entsprechend einer weiteren Fortbildung des erfindungsgemäßen Verfahrens wird durch die manuelle Eingabe des Kunden die Zahlungsart zur Begleichung der Schlussrechnung gesteuert. Dabei besteht eine Wahlmöglichkeit zwischen unbarer Bezahlung mittels Kreditkarte, Barzahlung an einem Geld-Ein-/Ausgabeautomaten oder an einer mit einer Kassierperson besetzten Barkasse.

Eine erfindungsgemäße Anordnung, die insbesondere für Waren geeignet ist, an denen die Warendaten in maschinenlesbarer Form, beispielsweise als Strichcodemarkierung und/oder RFID-Chip angebracht sind, umfasst wenigstens eine Warendaten-Erfassungseinheit, welche an einem Einkaufswagen anbringbar oder angebracht ist und die eine Leseeinrichtung für maschinenlesbare Daten sowie einen Speicher für diese enthält, des weiteren einen ersten Bereich für einen unbeladenen Einkaufswagen mit einer ersten Waage, eine Abfrageeinrichtung für die in der Warendaten-Erfassungseinheit gespeicherten Daten, eine Zentralstation mit einem Rechner, in der das Nettogewicht der im Einkaufswagen befindlichen Waren aus der Differenz des Wägeergebnis der ersten Waage und des Gewichts des beladenen Einkaufswagens aus dem Wägeergebnis der zweiten Waage errechnet und mit der Summe der aus den Warendaten ermittelten Warengewichte verglichen wird und die aus den Warendaten ermittelten Preise addiert und in einer Schlussrechnung niedergelegt werden.

Weitere Merkmale und Vorteile der Erfindung ergeben sich aus der folgenden Beschreibung, welche in Verbindung mit den beigefügten Zeichnungen die Erfindung an Hand zweier Ausführungsbeispiele erläutert. Es zeigt
- Fig. 1: ein Warenhaus in einer schematischen Draufsicht mit einer Einrichtung zur Erfassung und Verarbeitung von an den Waren angebrachten maschinenlesbaren Daten,
- Fig. 2: ein Warenhaus in einer schematischen Draufsicht mit einer Einrichtung zur Erfassung und Verarbeitung von Daten, die in an den Waren angebrachten Transpondern gespeichert sind.

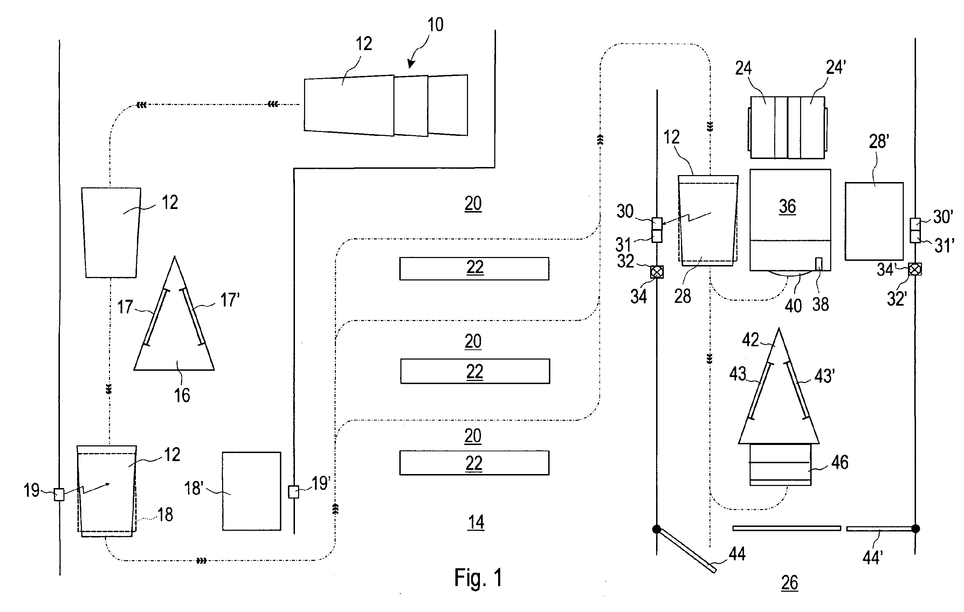

Fig. 1 zeigt ein Warenhaus in einer schematischen Draufsicht, wobei ein typischer Laufweg für Kunden mit einer strich-punktierten Linie dargestellt ist. Die Laufrichtung ist durch Dreifach-Pfeile gekennzeichnet. Nach dem Betreten des Warenhauses gelangt ein Kunde zunächst zu einem Einkaufswagen-Magazin 10 und entnimmt diesem einen Einkaufswagen 12.

Der Weg zu dem eigentlichen Verkaufsraum 14, in dem die Waren gelagert werden, führt an einer Bereitstellungseinheit 16 vorbei, in der in einer Halterung 17 eine Vielzahl von mobilen Warendaten-Erfassungseinheiten bereitgehalten werden. Diese sind mit einem Leser für Strichcodemarkierungen, einem Speicher für gelesene Strichcodemarkierungen, einer Anzeigeeinrichtung und wenigstens einer Eingabetaste ausgestattet. Darüber hinaus kann die Warendaten-Erfassungseinheit auch ein Lese- und/oder Schreibgerät für Transponder aufweisen. Die Warendaten-Erfassungseinheit wird während des ganzen Einkaufs mitgeführt, beispielsweise an dem Einkaufswagen 12 befestigt. Jede Warendaten-Erfassungseinheit ist mit einer Identifikationsnummer versehen. Des weiteren weist auch der Einkaufswagen 12 eine Identifikationsnummer auf, beispielsweise in Form eines Barcodes oder eines RFID-Chips. Vorzugsweise wird die Identifikationsnummer des Einkaufswagens 12 vor dem Warendaten-Erfassungseinheit erfasst, so dass eine Zuordnung zwischen der jeweiligen Waren-Erfassungseinheit und dem jeweiligen Einkaufswagen 12 ermöglicht ist.

In den Laufweg ist eine Eingangswaage 18 eingebaut, die von jedem Einkaufswagen 12 zwangsläufig überquert werden muss, wobei dessen Gewicht erfasst, von einem Sender 19 zu der Warendaten-Erfassungseinheit übertragen und in deren Speicher gespeichert wird oder zu einer zentralen Station weitergeleitet wird. Dadurch wird eine automatische und gewichtskontrollierte Warenerfassung auch möglich, wenn anderweitig erworbene Waren oder ein Einkaufskorb in den Einkaufswagen gelegt werden oder ein Kind auf den Einkaufswagen 12 mitgenommen wird. Der weitere Laufweg führt durch die verschiedenen Gänge 20 des Verkaufsraumes 14, die zwischen Warenauslagen 22 hindurch führen. Diesen kann der Kunde die gewünschten Waren entnehmen, diese mit der Warendaten-Erfassungseinrichtung erfassen und in den Einkaufswagen 12 legen.

Am Ausgang des Einkaufsraumes 14 führt der Laufweg an einem Computerterminal 24 vorbei, welches mit einem Sichtgerät und mehreren Tasten oder einem berührungsempfindlichen Bildschirm mit mehreren Schaltflächen ausgestattet ist. Mit den Tasten bzw. Schaltflächen signalisiert der Kunde die gewünschte Zahlungsweise "Kreditkarte", "Barzahlung an einem Geld-Ein-/Ausgabeautomaten" oder "Bar an einer Zahlkasse" und damit das Ende seiner Warenauswahl. Es ist jedoch auch möglich, dass diese Funktionen bereits in der Warenerfassungs-Einheit integriert sind. Der weitere Laufweg in Richtung zum Ausgang 26 des Warenhauses führt den Einkaufswagen 12 zwangsweise auf eine Ausgangswaage 28. Diese definiert auch einen Bereich, in dem eine drahtlose Abfrageeinrichtung 30 mit vorzugsweise einem Bondrucker 31 die Warendaten-Erfassungseinrichtung auszulesen vermag. Von dem Bondrucker 31 wird ein Kassenbon ausgedruckt, den der Kunde mit sich nimmt. Die Position des Einkaufswagens 12 in dem Bereich wird durch Sensoren 32 erfasst und die exakte Positionierung vorzugsweise durch optische Signalgeber 34 angezeigt, so dass eine exakte Wägung und ein zuverlässiges Auslesen der Warendaten-Erfassungseinrichtung gewährleistet ist. Es ist eine Zentralstation 36 mit einem hier nicht dargestellten Rechner vorgesehen, in dem das Nettogewicht der im Einkaufswagen befindlichen Waren aus dem Wägeergebnis der Eingangswaage 18 und der Ausgangswaage 28 errechnet und mit der Summe der aus den Warendaten ermittelten Warengewichte verglichen wird und die aus den Warendaten ermittelten Preise addiert und in einer Schlussrechnung niedergelegt werden. Die Schlussrechnung wird zusammen mit der Identifikationsnummer der Warendaten-Erfassungseinheit in der Zentralstation 36 gespeichert. Die Rechnerstation kann sich selbstverständlich auch an einem anderen Ort wie einem Back-Office befinden.

Abhängig von der am Computerterminal 24 eingegebenen Zahlungsweise wird nach der Wägung auf der Ausgangswaage 28 wie folgt verfahren: Bei der Zahlungsweise "Kreditkarte" begibt sich der Kunde zu der Zentralstation 36, die mit einer Tastatur und einem Kreditkartengerät 38 ausgestattet ist. Mit der Tastatur gibt er die in dem Speicher der Warendaten-Erfassungseinheit gespeicherte und auf deren Sichtgerät angezeigte Identifikationsnummer ein. Die Angabe der Identifikationsnummer kann jedoch auch kontaktlos erfolgen, indem das Warenerfassungsgerät beispielsweise mit einem RFID-Chip zur Identifizierung ausgestattet ist. Damit wird die Schlussrechnung dem jeweiligen Kunden eindeutig zugeordnet. Nach Einführen einer Kreditkarte und ggf. Eingabe einer PIN-Nummer wird der Betrag der Schlussrechnung dem Konto des Kunden belastet.

Bei der Zahlungsweise "Barzahlung an einem Geld-Ein-/Ausgabeautomaten" begibt sich der Kunde ebenfalls zu der Zentralstation 36, in die auch ein ein Sichtgerät umfassendes, an sich bekanntes Geld-Ein-/Ausgabegerät eingebaut ist. Der Kunde gibt beispielsweise auf der Tastatur die auf dem Sichtgerät der Warendaten-Erfassungseinheit angezeigte Identifikationsnummer ein. Die Angabe der Identifikationsnummer kann jedoch auch kontaktlos erfolgen. Damit kann das Zentralgerät jeder Warendaten-Erfassungseinheit und damit jedem Kunden eine Schlussrechnung zuordnen. Auf dem Sichtgerät des Geld-Ein-/Ausgabegerätes wird der zu zahlende Betrag angezeigt. Der Kunde zahlt einen Betrag in das Gerät ein und erhält evtl. anfallendes Rückgeld von dem Geld-Ein-/Ausgabegerät ausgezahlt.

In einer Weiterentwicklung der Erfindung kann jedoch auch vorgesehen sein, dass das Computerterminal 24 und die Abfrageeinrichtung 30 mit dem Bondrucker 31 in der Zentralstation 36 integriert sind.

Nachdem der Kunde in der vorbeschriebenen Weise seine Schlussrechnung beglichen hat, führt ihn der Laufweg an einer Rückgabeeinheit 42 vorbei, die mit einer Vielzahl von Aufnahmen 43 für Warendaten-Erfassungseinheiten ausgestattet ist. In dieser deponiert er seine Warendaten-Erfassungseinheit, welche mit dem Zentralgerät 36 in Datenverbindung steht. Hier wird geprüft, ob die der Identifikationsnummer zugehörige Schlussrechnung beglichen wurde. Ist dies der Fall, wird eine Ausgangssperre 44 geöffnet und der Kunde kann das Warenhaus verlassen. Auch diese Rückgabeeinheit 42 kann als Teil der Zentralstation 36 ausgebildet sein.

Hat der Kunde die Zahlungsart "Bar an einer Zahlkasse" gewählt oder vergessen, seine Schlussrechnung zu begleichen, so bleibt die Ausgangssperre 44 geschlossen und der Kunde hat einen bedienten Zahltisch 46 aufzusuchen, an dem die Schlussrechnung unter Vorlage des Kassenbon bar bezahlt werden kann. Der Zahltisch ist wenigstens mit einer Kassenlade ausgestattet. Nach Begleichung der Schlussrechnung gibt die Bedienperson die Ausgangssperre 44 frei.

Um den Kundendurchsatz zu erhöhen, ist die Bereitstellungseinheit 16 spiegelbildlich mit einer zweiten Halterung 17' ausgestattet, an der ein nicht dargestellter zweiter Laufweg vorbei führt. Ebenso ist eine zweite Eingangswaage 18' und ein zweiter Sender 19' vorgesehen. Am Ausgang des Einkaufsraumes 14 sind aus dem gleichen Grund ein zweites Computerterminal 24', eine zweite Ausgangswaage 28', eine zweite Abfrageeinrichtung 30', ein zweiter Bondrucker 31' und eine zweite Aufnahme 43' vorgesehen. Das Kreditkartengerät 38 und das Geld-Ein-/Ausgabegerät 40 sind vorzugsweise beiden Laufwegen zugeordnet. Gleiches gilt für den Zahltisch 46.

An Stelle der transportablen Warendaten-Erfassungseinheiten kann auch eine solche Einheit fest mit jedem Einkaufswagen verbunden sein. In diesem Fall erübrigt sich eine Bereitstellungseinheit 16 und eine Rückgabeeinheit 42. Andererseits muss das Einkaufswagen-Magazin 10 mit einer Ladestation für die Batterien der festen Warendaten-Erfassungseinheiten ausgestattet sein.

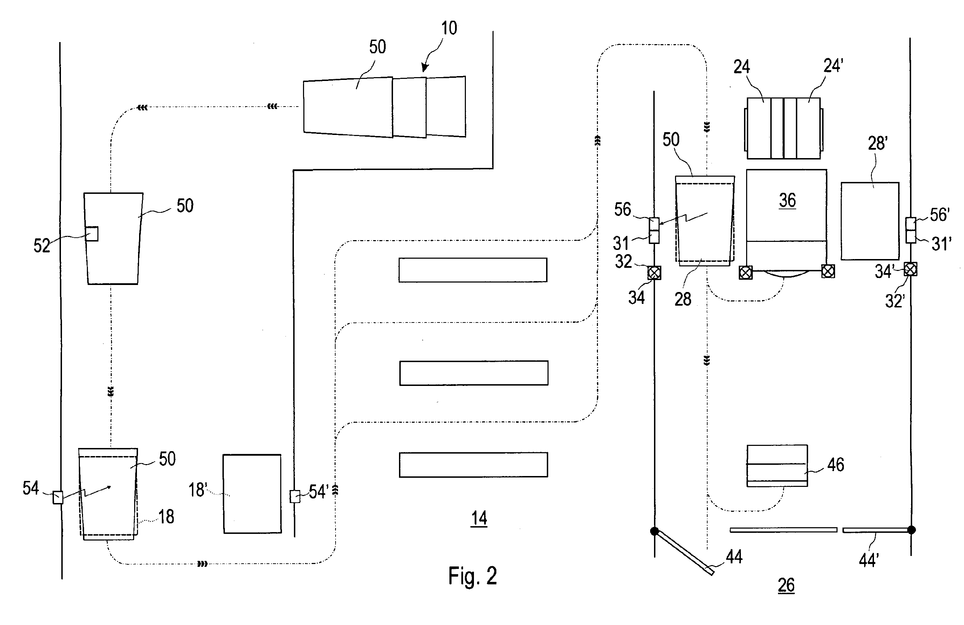

Fig. 2 zeigt eine alternative Anordnung zur Erfassung und Abrechnung von Warendaten, die für ein Warensortiment geeignet ist, bei dem an allen Waren ein Transponder angebracht ist. Sie entspricht in weiten Teilen der Anordnung nach Fig. 1, weshalb gleiche Teile mit gleichen Bezugszeichen gekennzeichnet sind. Hier kann die Warendaten-Erfassungseinheit entfallen. Enthält jedoch der Verkaufsraum Waren, die sowohl mit einem Barcode als auch mit RFID-Chips ausgestattet sind, so ist der Einsatz von Warenerfassungseinheiten, die sowohl ein Lesegerät für Barcodecodierungen als auch ein Lesegerät für RFID-Chips enthält, erforderlich. Diese Variante wurde bereits unter Fig. 1 beschrieben.

Ein Einkaufswagen 50 ist mit einem Transponder 52 ausgestattet. In den Laufweg ist eine Eingangswaage 18 eingebaut, die von dem Einkaufswagen 50 zwangsläufig überquert werden muss, wobei dessen Gewicht erfasst wird. Zugleich wird aus dem Transponder 52 eine Identifikationsnummer des anderen Einkaufswagens 50 durch ein erstes Lesegerät 54 ausgelesen und zusammen mit dem Wägeergebnis der Eingangswaage 18 zu der Zentralstation 36 übertragen und dort gespeichert.

Am Ausgang des Warenauslageraumes 14 führt der Laufweg an dem bekannten Computerterminal 24 vorbei, welches mit einem Sichtgerät und mehreren Tasten oder einem berührungsempfindlichen Bildschirm mit mehreren Schaltflächen ausgestattet ist. Mit den Tasten bzw. Schaltflächen signalisiert der Kunde die gewünschte Zahlungsweise "Kreditkarte", "Barzahlung an einem Geld-Ein-/Ausgabeautomaten" oder "Bar an einer Zahlkasse" und damit das Ende seiner Warenauswahl. Der weitere Laufweg in Richtung zum Ausgang 26 des Warenhauses führt den anderen Einkaufswagen 50 zwangsweise auf eine Ausgangswaage 28. Diese definiert auch einen Bereich, in dem ein zweites Lesegerät 56 mit einem Bondrucker 31 die an den gesammelten Waren befestigten Transponder auszulesen vermag. Von dem Bondrucker 31 wird ein Kassenbon ausgedruckt, den der Kunde mit sich nimmt. Die Position des Einkaufswagens 12 in dem Bereich wird durch Sensoren 32 erfasst und die exakte Positionierung durch optische Signalgeber 34 angezeigt, so dass eine exakte Wägung und ein zuverlässiges Auslesen der Transponder gewährleistet ist. Der Bezahlvorgang und die Freigabe der Ausgangssperre entsprechen dem oben Beschriebenen.

### Bezugszeichenliste

- 10: Einkaufswagen-Magazin
- 12: Einkaufswagen
- 14: Verkaufsraum
- 16: Bereitstellungseinheit
- 17: Halterung
- 18: Eingangswaage
- 19: Sender
- 20: Gang
- 22: Warenauslage
- 24: Computerterminal
- 26: Ausgang
- 28: Ausgangswaage
- 30: Abfrageeinrichtung
- 31: Bondrucker
- 32: Sensor
- 34: optischer Signalgeber
- 36: Zentralstation
- 38: Kreditkartengerät
- 40: Geld-Ein-/Ausgabegerät
- 42: Rückgabeeinheit
- 43: Aufnahme
- 44: Ausgangssperre
- 46: Zahltisch
- 50: Einkaufswagen
- 52: Transponder
- 54: erstes Lesegerät
- 56: zweites Lesegerät

## Patentansprüche

1. Verfahren zur Erfassung und Abrechnung von Warendaten, wobei die Warendaten in maschinenlesbarer Form als Barcode und/oder als RFID-Chip an den Waren angebracht sind, umfassend folgende Verfahrensschritte:
- das Leergewicht eines Einkaufswagens (12, 50) wird zunächst in einem ersten Bereich gewogen,
- dann werden die Waren in einem Verkaufsraum (14) gesammelt und die Warendaten jeder in den Einkaufswagen (12, 50) gelegten Ware werden mit einer Warendaten-Erfassungseinheit erfasst und gespeichert,
- nach Abschluss des Sammelns wird der Einkaufswagen (12, 50) in einen zweiten Bereich gebracht, in dem eine Wägung des beladenen Einkaufswagens (12, 50) vorgenommen wird,
- die Warendaten-Erfassungseinheit wird ausgelesen,
- mit Hilfe der aus der Warendaten-Erfassungseinheit ausgelesenen Warendaten wird das Gewicht und der Preis der im Einkaufswagen (12, 50) befindlichen Waren ermittelt,
- die aus den Warendaten ermittelten Gewichte der Waren werden kumuliert und mit dem Gewicht des mit diesen Waren beladenen Einkaufswagens (12, 50) unter Abzug von dessen Leergewicht verglichen,
- aus den Preisen der Waren wird eine Schlussrechnung gebildet.

2. Verfahren nach Anspruch 1, **dadurch gekennzeichnet, dass** nach Abschluss des Sammelns der Einkaufswagen (50) in einen Bereich gebracht wird, in dem ein drahtloser Zugriff auf die RFID-Chips möglich ist.

3. Verfahren nach Anspruch 1 oder 2, bei dem nach Begleichen der Schlussrechnung eine Ausgangssperre geöffnet wird.

4. Verfahren nach einem der vorhergehenden Ansprüche, bei dem durch die manuelle Eingabe des Kunden die Zahlungsart zur Begleichung der Schlussrechnung gesteuert wird.

5. Anordnung insbesondere zur Durchführung des Verfahrens nach Anspruch 1, umfassend
eine mobile Warendaten-Erfassungseinheit mit einer Leseeinrichtung für maschinenlesbare Daten wie einen Barcode und/oder einen RFID-Chip und einen Speicher für diese Daten,
einen ersten Stellplatz für einen unbeladenen Einkaufswagen mit einer ersten Waage,
einen zweiten Stellplatz für einen beladenen Einkaufswagen (12) mit einer zweiten Waage (28, 28'),
eine Abfrageeinrichtung (30, 30') für die in der Warendaten-Erfassungseinheit gespeicherten Daten,
eine Zentralstation (36) mit einem Rechner, in der das Nettogewicht der im Einkaufswagen (12) befindlichen Waren aus dem Wägeergebnis der zweiten Waage (28, 28') und dem Leergewicht des Einkaufswagens (12) errechnet und mit der Summe der aus den Warendaten ermittelten Warengewichte verglichen wird, die aus den Warendaten ermittelten Preise addiert und in einer Schlussrechnung niedergelegt werden.

6. Anordnung nach Anspruch 5, mit einem Bondrucker (31, 31'), der die Schlussrechnung auf einem Kassenbon auszudrucken vermag.

7. Anordnung nach Anspruch 5 oder 6, mit einem Kreditkartengerät (38) oder auch zusätzlich einer PIN-Tastatur.

8. Anordnung nach einem der Ansprüche 5 bis 7, mit einem bedienten Zahltisch (46), an dem die Schlussrechnung bar bezahlt werden kann, wobei der Zahltisch (46) wenigstens mit einer Kassenlade ausgestattet ist.

9. Anordnung nach einem der Ansprüche 5 bis 8, mit einem Geld-Ein-/Ausgabegerät (40).

10. Anordnung nach einem der Ansprüche 5 bis 9, mit einer Ausgangssperre (44, 44'), die einen Ausgang (26) erst nach Begleichung der Schlussrechnung frei gibt.
